# EUROPEAN PATENT APPLICATION

(11) **EP 4 848 844 A1**
(43) Date of publication of application: **02.12.2026**
(21) Application number: 25745281.3
(22) Date of filing: 21.01.2025
(51) Int. Cl.: H04W 64/00, H04W 24/08, G01S 13/00, G01S 13/88, H04B 7/06, H04B 7/08, H04L 5/00

(54) **METHOD AND APPARATUS RELATED TO WIRELESS SENSING**

(30) Priority: 24.01.2024 KR 20240010590
(71) Applicant: LG Electronics Inc., Yeongdeungpo-gu Seoul 07336 (KR)
(72) Inventor: KO, Woosuk, Seoul 06772 (KR)
(74) Representative: Maikowski & Ninnemann Patentanwälte Partnerschaft mbB
(86) International application number: PCT/KR2025/099107
(87) International publication number: WO 2025/159616

(57) **Abstract**

In one embodiment, a method performed by a first device is provided. For example, the first device may select at least one device in which a line-of-sight with the first device is secured. For example, the first device may transmit sensing operation request information for requesting a sensing operation to the at least one device in which the line-of-sight with the first device is secured.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 may show the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In an embodiment, a method is provided that is performed by a first device. For example, the first device may transmit sensing operation request information for requesting a sensing operation, to the at least one device for which the line-of-sight with the first device is secured.

In an embodiment, a first device is provided. The first device may comprise: at least one transceiver; at least one processor; and at least one memory connected to the at least one processor and storing instructions that, based on being executed by the at least one processor, cause the first device to perform operations. For example, the operations may comprise: transmitting sensing operation request information for requesting a sensing operation, to the at least one device for which the line-of-sight with the first device is secured.

In an embodiment, a processing device adapted to control a first device is provided. The processing device may comprise: at least one processor; and at least one memory connected to the at least one processor and storing instructions that, based on being executed by the at least one processor, cause the first device to perform operations. For example, the operations may comprise: transmitting sensing operation request information for requesting a sensing operation, to the at least one device for which the line-of-sight with the first device is secured.

In an embodiment, a non-transitory computer-readable storage medium storing instructions is provided. The instructions, when executed by at least one processor, may cause a first device to perform operations. For example, the operations may comprise: transmitting sensing operation request information for requesting a sensing operation, to the at least one device for which the line-of-sight with the first device is secured.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows three cast types, based on an embodiment of the present disclosure.
FIG. 10 shows a synchronization source or synchronization reference of V2X, based on an embodiment of the present disclosure.
FIG. 11 shows an example of an architecture of a 5G system capable of positioning a UE having access to a next generation-radio access network (NG-RAN) or an E-UTRAN based on an embodiment of the present disclosure.
FIG. 12 shows an example of implementing a network for measuring a location of a UE based on an embodiment of the present disclosure.
FIG. 13 shows an example of a protocol layer used to support LTE positioning protocol (LPP) message transmission between an LMF and a UE based on an embodiment of the present disclosure.
FIG. 14 shows an example of a protocol layer used to support NR positioning protocol A (NRPPa) PDU transmission between an LMF and an NG-RAN node based on an embodiment of the present disclosure.
FIG. 15 shows an OTDOA positioning method based on an embodiment of the present disclosure.
FIG. 16 shows double-side round trip time (RTT) based on an embodiment of the present disclosure.
FIG. 17 is a diagram for explaining a method related to wireless sensing, based on an embodiment of the present disclosure.
FIG. 18 is a diagram for explaining a method related to wireless sensing, based on an embodiment of the present disclosure.
FIG. 19 is a diagram for explaining a procedure of a method related to wireless sensing, based on an embodiment of the present disclosure.
FIG. 20 is a diagram for explaining a method performed by a first device, based on an embodiment of the present disclosure.
FIG. 21 is a diagram for explaining a method performed by a second device, based on an embodiment of the present disclosure.
FIG. 22 shows a communication system 1, based on an embodiment of the present disclosure.
FIG. 23 shows wireless devices, based on an embodiment of the present disclosure.
FIG. 24 shows a signal process circuit for a transmission signal, based on an embodiment of the present disclosure.
FIG. 25 shows another example of a wireless device, based on an embodiment of the present disclosure.
FIG. 26 shows a hand-held device, based on an embodiment of the present disclosure.
FIG. 27 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

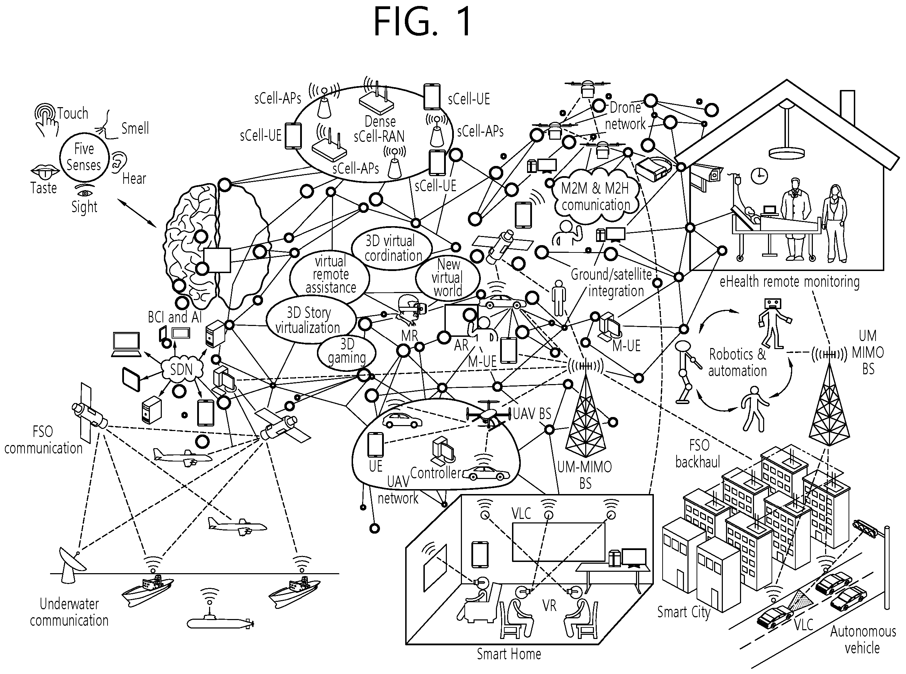

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

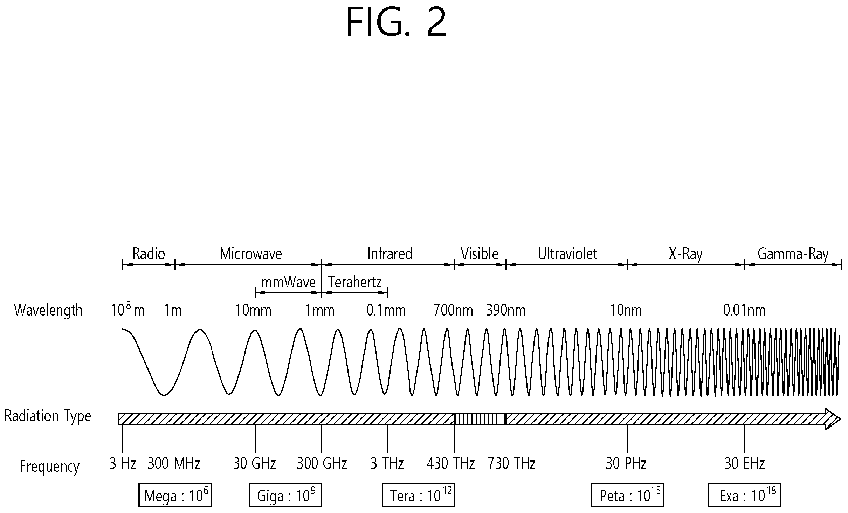

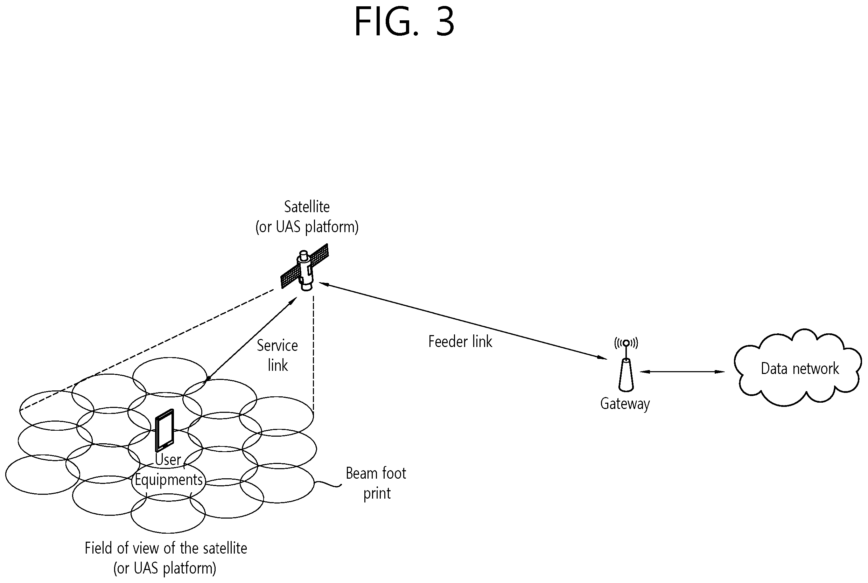

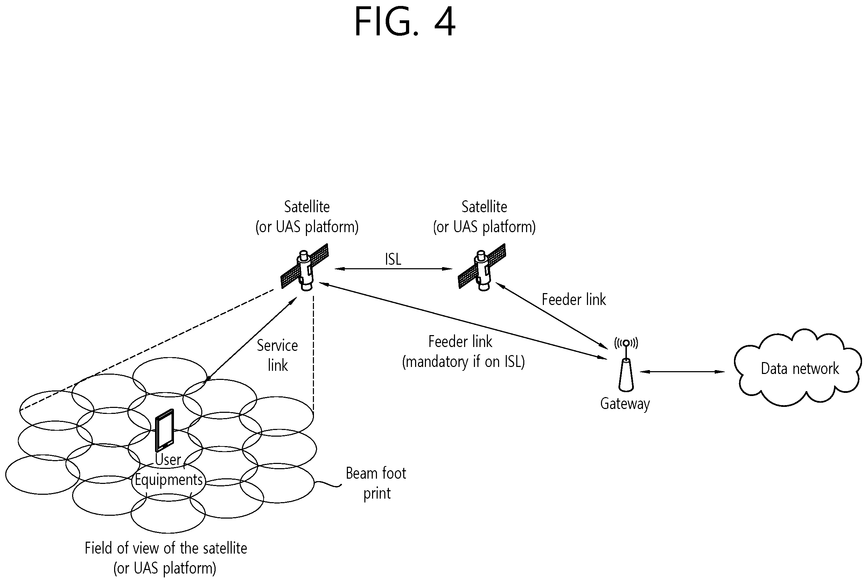

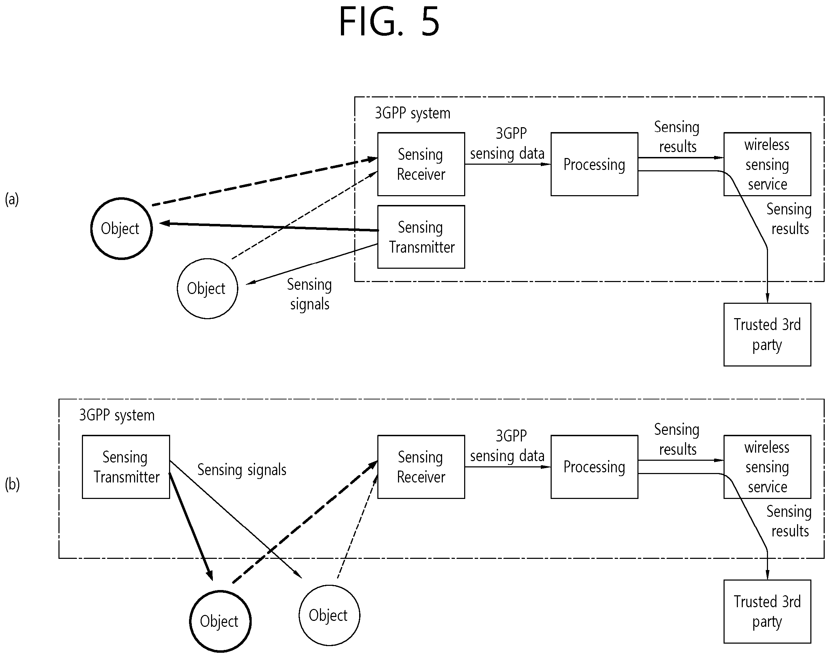

Core implementation technology of 6G system is described below.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, e.g., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| | 15kHz (u=0) | 14 | 10 | 1 |
| | 30kHz (u=1) | 14 | 20 | 2 |
| normal CP | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

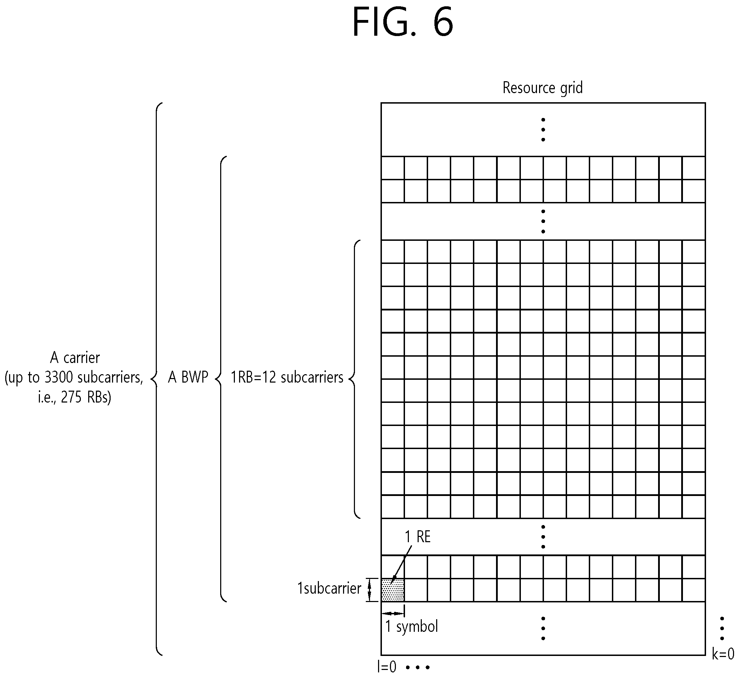

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

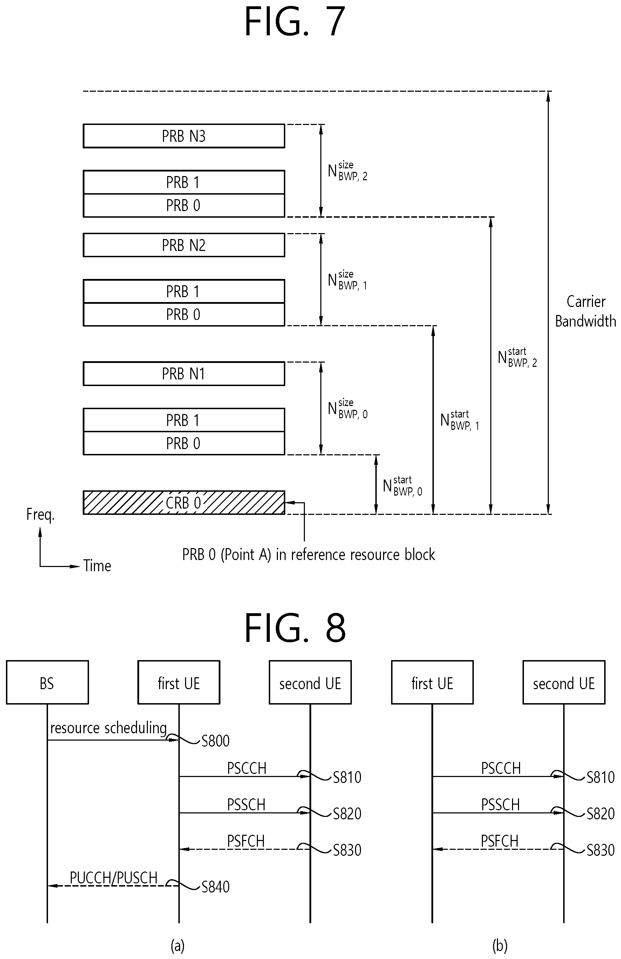

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, an example of a frequency range of a wireless communication system is described.

A frequency band may be defined as two different types of frequency ranges. The two different types of frequency ranges may be FR1 and FR2 (FR2-1 and/or FR2-2). The values of the frequency ranges may be changed (or varied), and for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. For example, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 may include an unlicensed band. The unlicensed band may be used for diverse purposes, e.g., including communication for vehicles (e.g. autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 (FR 2-1) | 24250MHz - 52600MHz | 60, 120, 240kHz |
| FR2 (FR 2-2) | 52600MHz - 71000MHz | 60, 120, 240, 480, 960 kHz |

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

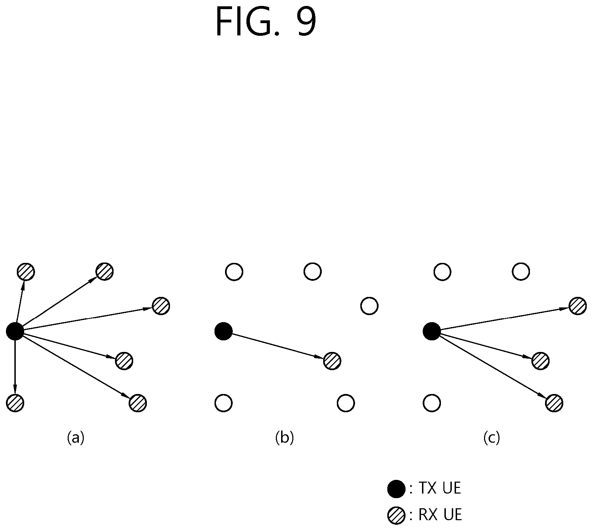

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

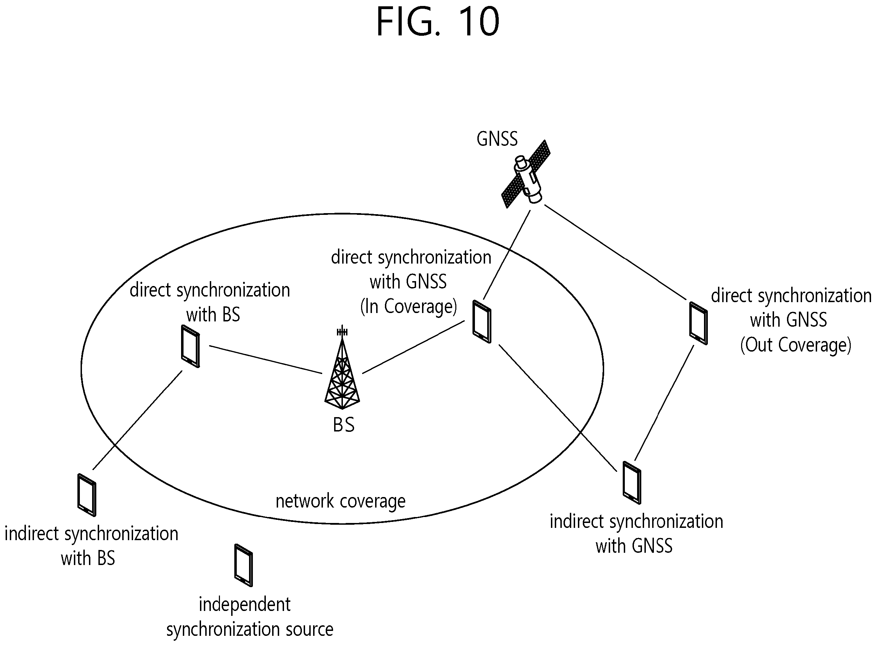

FIG. 10 shows a synchronization source or synchronization reference of V2X, based on an embodiment of the present disclosure. The embodiment of FIG. 10 may be combined with various embodiments of the present disclosure.

Referring to FIG. 10, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

A SL synchronization source may be associated/related with a synchronization priority. For example, a relation between the synchronization source and the synchronization priority may be defined as shown in Table 5 or Table 6. Table 5 or Table 6 is for exemplary purposes only, and the relation between the synchronization source and the synchronization priority may be defined in various forms.

**[Table 5]**

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

**[Table 6]**

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 5 or Table 6, P0 may denote a highest priority, and P6 may denote a lowest priority. In Table 5 or Table 6, the BS may include at least one of a gNB and an eNB. Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/reception, physical sidelink feedback channel (PSFCH) transmission/reception, S-SSB transmission/reception, reference signal transmission/reception, etc.) based on the obtained synchronization.

Hereinafter, positioning and wireless sensing will be described. In the present disclosure, a technology (operation) for a positioning service may also be applied to a technology (operation) for wireless sensing and communication integrated with wireless sensing (e.g., a technology related to a location management function (LMF) / a technology related to a sensing management function (SMF)).

Hereinafter, positioning will be described.

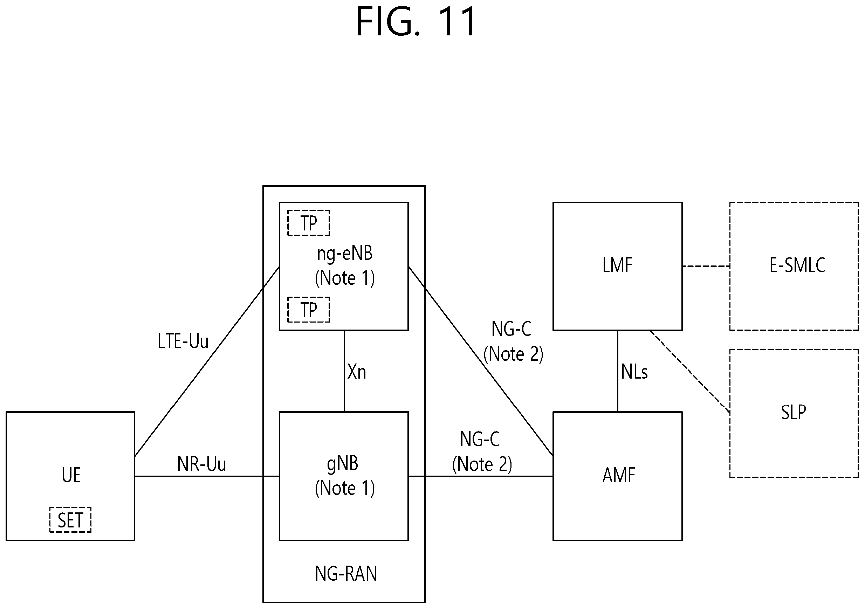

FIG. 11 shows an example of an architecture of a 5G system capable of positioning a UE having access to a next generation-radio access network (NG-RAN) or an E-UTRAN based on an embodiment of the present disclosure. The embodiment of FIG. 11 may be combined with various embodiments of the present disclosure.

Referring to FIG. 11, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

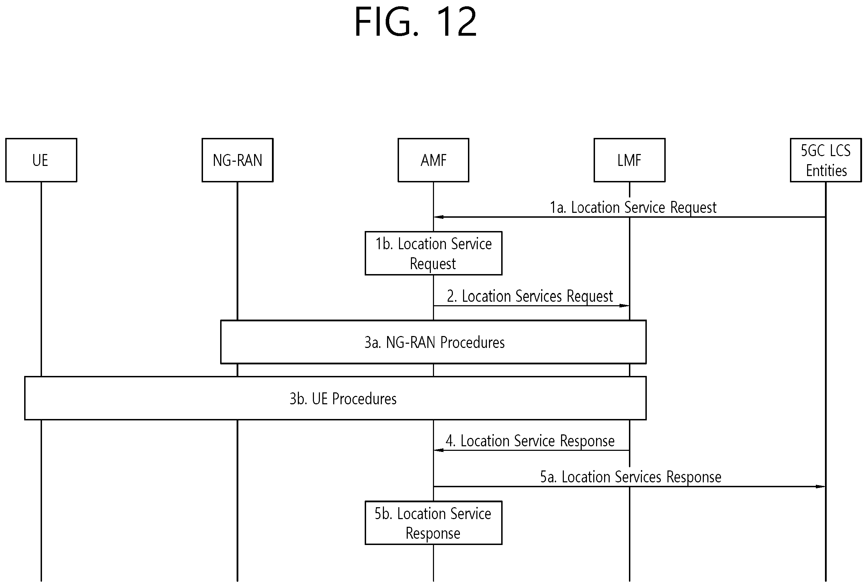

FIG. 12 shows an example of implementing a network for measuring a location of a UE based on an embodiment of the present disclosure. The embodiment of FIG. 12 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 12. For example, it may be assumed in FIG. 12 that the UE is in a connected mode. However, due to signaling and data inactivation or the like, the signaling connection may be released by NG-RAN while a positioning process is performed.

A network operation process for measuring a location of a UE will be described in detail with reference to FIG. 12. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 12 is initiated by step a1, the AMF may transfer the location service response to a 5GC entity such as GMLC, and if the procedure of FIG. 12 is initiated by step 1b, the AMF may use the location service response to provide a location service related to an emergency call or the like.

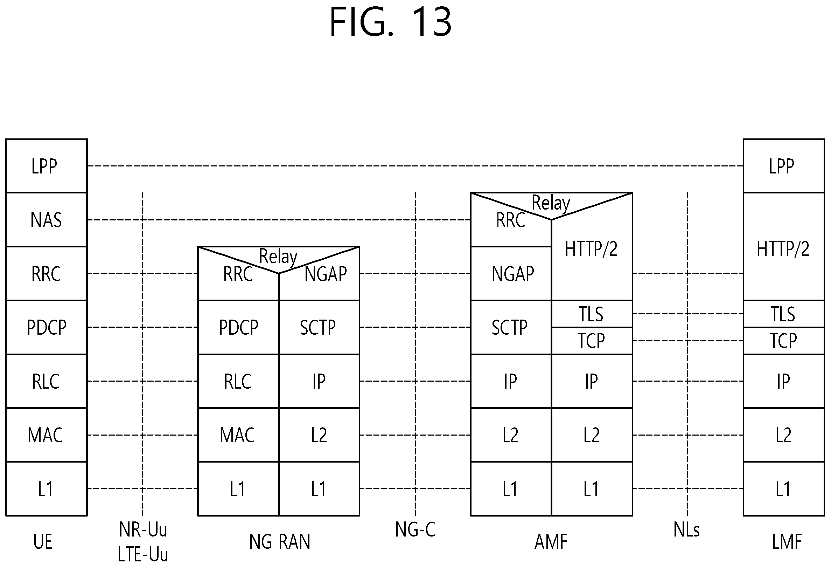

FIG. 13 shows an example of a protocol layer used to support LTE positioning protocol (LPP) message transmission between an LMF and a UE based on an embodiment of the present disclosure. The embodiment of FIG. 13 may be combined with various embodiments of the present disclosure.

An LPP PDU may be transmitted through a NAS PDU between an AMF and the UE. Referring to FIG. 13, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

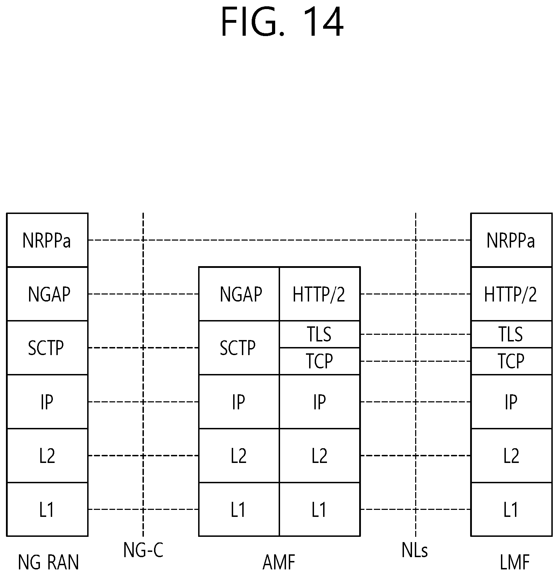

FIG. 14 shows an example of a protocol layer used to support NR positioning protocol A (NRPPa) PDU transmission between an LMF and an NG-RAN node based on an embodiment of the present disclosure. The embodiment of FIG. 14 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

### (1) OTDOA (Observed Time Difference Of Arrival)

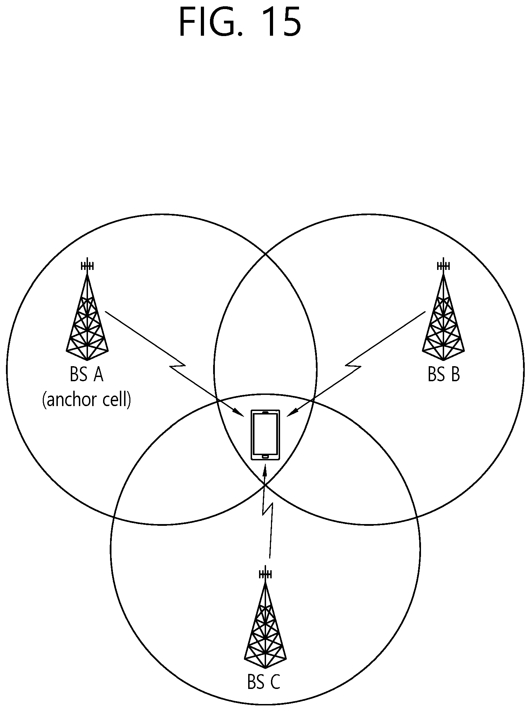

FIG. 15 shows an OTDOA positioning method based on an embodiment of the present disclosure. The embodiment of FIG. 15 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. For example, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1. [Equation 1] $RSTDi , 1 = \frac{\sqrt{{\left({x}_{t}-{x}_{i}\right)}^{2} + {\left({y}_{t}-{y}_{i}\right)}^{2}}}{c} - \frac{\sqrt{{\left({x}_{t}-{x}_{1}\right)}^{2} + {\left({y}_{t}-{y}_{1}\right)}^{2}}}{c} + \left({T}_{i}-{T}_{1}\right) + \left({n}_{i}-{n}_{1}\right)$

Herein, c may be the speed of light, {xt, yₜ} may be a (unknown) coordinate of a target UE, {xᵢ, yᵢ} may be a coordinate of a (known) TP, and {xi, y₁} may be a coordinate of a reference TP (or another TP). Herein, (Tᵢ-Tₗ) may be referred to as "real time differences (RTDs)" as a transmission time offset between two TPs, and nᵢ, nₗ may represent values related to UE TOA measurement errors.

### (2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.
- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.$TADV Type 1 = \left(ng-eNB Rx-Tx time difference\right) + \left(UE E-UTRA Rx-Tx time difference\right)$$TADV Type 2 = ng - eNB Rx - Tx time difference$

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

### (3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

### (4) Round Trip Time (RTT)

RTT is a positioning technique that can measure a distance between two entities even if a target entity and a server entity are out of time synchronization. If RTT is performed with multiple server entities, distances from each of the server entities may be measured separately. In addition, by drawing circles using the distances measured from each of the server entities, absolute positioning of the target entity may be performed by the intersection point of the circles.

RTT between two entities is performed by the following method. An entity #1 may transmit a PRS #1 at t1, and an entity #2 may receive the PRS #1 at t2. After the PRS #1 is received by the entity #2, the entity #2 may transmit a PRS #2 at t3, and the entity #1 may receive the PRS #2 at t4. In this case, a distance D between the two entities may be obtained as follows.$D = c \times \left\{\left({t}_{4}-{t}_{1}\right)-\left({t}_{3}-{t}_{2}\right)\right\} / 2$ (*where c is the speed of light*)

For RTT between the UE and the gNB, a distance between the UE and the gNB may be obtained based on the Equation above using UE Rx - Tx time difference and gNB Rx - Tx time difference in the Tables 13 and 15 below.

### (5) Double-side RTT

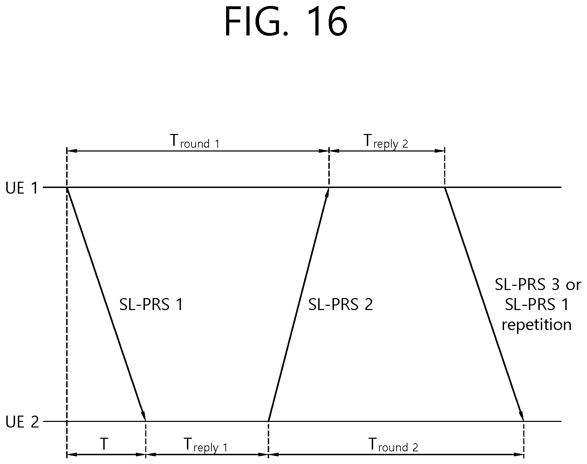

FIG. 16 shows double-side round trip time (RTT) based on an embodiment of the present disclosure. The embodiment of FIG. 16 may be combined with various embodiments of the present disclosure.

For example, a method for performing double-side RTT between two entities may be as follows.

For example, double-side RTT may be a positioning technology that can measure a distance between two entities even if a sampling clock frequency offset exists between a target entity and a server entity.

For example, double-side RTT is widely used in ultra-wideband (UWB) positioning and can reduce the influence of clock error.

For example, the propagation delay T^ may be estimated by two measurements (e.g., T_{round1}, T_{round2}, T_{reply1}, T_{reply2}).

For example, the propagation delay T(T^) may be calculated based on Equation 2. [Equation 2] $\hat{T} = \frac{1}{2} \left({T}_{round 1}-{T}_{reply 1}\right)$

For example, the propagation delay T(T^) may be calculated based on Equation 3. [Equation 3] $\hat{T} = \frac{1}{2} \left({T}_{round 2}-{T}_{reply 2}\right)$

In addition, T_{round1}×T_{round2}-T_{reply1}×T_{reply2} may be obtained based on Equation 4. [Equation 4] ${T}_{round 1} \times {T}_{round 2} - {T}_{reply 1} \times {T}_{reply 2} = 4 {\hat{T}}^{2} + 2 \hat{T} \left({T}_{reply 1}+{T}_{reply 2}\right) = \hat{T} \left({T}_{round 1}+{T}_{round 2}+{T}_{reply 1}+{T}_{reply 2}\right)$

Herein, Equation 4 may be the same as Equation 5. [Equation 5] ${T}_{round 1} \times {T}_{round 2} = \left(2\hat{T}+{T}_{reply 1}\right) \left(2\hat{T}+{T}_{reply 2}\right) = 4 {\hat{T}}^{2} + 2 \hat{T} \left({T}_{reply 1}+{T}_{reply 2}\right) + {T}_{reply 1} \times {T}_{reply 2}$

Therefore, the propagation delay T(T^) can be estimated as shown in Equation 6. [Equation 6] $\hat{T} = \frac{{T}_{round 1} \times {T}_{round 2} - {T}_{reply 1} \times {T}_{reply 2}}{\left({T}_{round 1}+{T}_{round 2}+{T}_{reply 1}+{T}_{reply 2}\right)}$

In this case, the error of propagation delay estimation due to clock error may be obtained based on Equation 7. [Equation 7] $error = \hat{T} - T \approx \frac{\left({e}_{UE 1}+{e}_{UE 2}\right)}{2} \hat{T}$

Herein, e_{UE1} and e_{UE2} may be the clock offset of UE1 and UE2.

T(T^) may be estimated propagation delay between UE1 and UE2.

In the present disclosure, the following definition(s)/applicable target(s) may also be applied to DL/UL/SL positioning (based on an RS (e.g., SRS, PRS, etc.)).

For example, the following may represent an example of a reference signal time difference (RSTD). For example, the following RSTD may be applied for SL positioning.

Reference signal time difference (RSTD)
- Definition: The relative timing difference between the E-UTRA neighbour cell j and the E-UTRA reference cell i may be defined as T_{SubframeRxj} - T_{SubframeRxi}, where: T_{SubframeRxj} may be the time when the UE receives the start of one subframe from E-UTRA cell j, and T_{SubframeRxi} may be the time when the UE receives the corresponding start of one subframe from E-UTRA cell i that is closest in time to the subframe received from E-UTRA cell j. The reference point for the observed subframe time difference may be the antenna connector of the UE.
- Applicable for: RRC_CONNECTED inter-RAT

For example, the following may represent an example of a DL PRS reference signal received power (RSRP). For example, the following DL PRS RSRP may be applied for SL positioning.

DL PRS reference signal received power (RSRP)
- Definition: DL PRS reference signal received power (RSRP), may be defined as the linear average over the power contributions (in [W]) of the resource elements that carry DL PRS reference signals configured for RSRP measurements within the considered measurement frequency bandwidth. For frequency range 1, the reference point for the DL PRS-RSRP may be the antenna connector of the UE. For frequency range 2, DL PRS-RSRP may be measured based on the combined signal from antenna elements corresponding to a given receiver branch. For frequency range 1 and 2, if receiver diversity is in use by the UE, the reported DL PRS-RSRP value may not be lower than the corresponding DL PRS-RSRP of any of the individual receiver branches.
- Applicable for: RRC_CONNECTED intra-frequency, RRC_CONNECTED inter-frequency

For example, the following may represent an example of a DL relative signal time difference (RSTD). For example, the following DL RSTD may be applied for SL positioning.

Downlink relative signal time difference (DL RSTD)
- Definition: DL RSTD between the positioning node j and the reference positioning node i, may be defined as T_{SubframeRxj} - T_{SubframeRxi}. Herein, T_{SubframeRxj} may be the time when the UE receives the start of one subframe from positioning node j, and T_{SubframeRxi} may be the time when the UE receives the corresponding start of one subframe from positioning node i that is closest in time to the subframe received from positioning node j. Multiple DL PRS resources can be used to determine the start of one subframe from a positioning node. For frequency range 1, the reference point for the DL RSTD may be the antenna connector of the UE. For frequency range 2, the reference point for the DL RSTD may be the antenna of the UE.
- Applicable for: RRC_CONNECTED intra-frequency, RRC_CONNECTED inter-frequency

For example, the following may represent an example of a UE Rx-Tx time difference. For example, the following UE Rx-Tx time difference may be applied for SL positioning.

UE Rx-Tx time difference
- Definition: The UE Rx-Tx time difference may be defined as T_{UE-RX} - T_{UE-TX}. Herein, T_{UE-RX} may be the UE received timing of downlink subframe #i from a positioning node, defined by the first detected path in time, and T_{UE-TX} may be the UE transmit timing of uplink subframe #j that is closest in time to the subframe #i received from the positioning node. Multiple DL PRS resources can be used to determine the start of one subframe of the first arrival path of the positioning node. For frequency range 1, the reference point for T_{UE-RX} measurement may be the Rx antenna connector of the UE and the reference point for T_{UE-TX} measurement may be the Tx antenna connector of the UE. For frequency range 2, the reference point for T_{UE-RX} measurement may be the Rx antenna of the UE and the reference point for T_{UE-TX} measurement may be the Tx antenna of the UE.
- Applicable for: RRC_CONNECTED intra-frequency, RRC_CONNECTED inter-frequency

For example, the following may represent an example of a UL Relative Time of Arrival (RTOA) (T_{UL-RTOA}). For example, the following UL RTOA may be applied for SL positioning.

UL Relative Time of Arrival (UL RTOA) (T_{UL-RTOA})
- Definition: The UL Relative Time of Arrival (T_{UL-RTOA}) may be the beginning of subframe i containing SRS received in positioning node j, relative to the configurable reference time. Multiple SRS resources for positioning can be used to determine the beginning of one subframe containing SRS received at a positioning node. The reference point for T_{UL-RTOA} may be as follows: - For type 1-C base station TS 38.104 [9]: Rx antenna connector, - For type 1-O or 2-O base station TS 38.104 [9]: Rx antenna, - For type 1-H base station TS 38.104 [9]: Rx Transceiver Array Boundary connector.

For example, the following may represent an example of a gNB Rx-Tx time difference. For example, the following gNB Rx-Tx time difference may be applied for SL positioning.

### gNB Rx-Tx time difference

Definition: The gNB Rx-Tx time difference may be defined as T_{gNB-RX} - T_{gNB-TX}. Herein, T_{gNB-RX} may be the positioning node received timing of uplink subframe #i containing SRS associated with UE, defined by the first detected path in time. T_{gNB-TX} may be the positioning node transmit timing of downlink subframe #j that is closest in time to the subframe #i received from the UE. Multiple SRS resources for positioning can be used to determine the start of one subframe containing SRS. The reference point for T_{gNB-RX} may be as follows: - For type 1-C base station TS 38.104 [9]: Rx antenna connector, - For type 1-O or 2-O base station TS 38.104 [9]: Rx antenna, - For type 1-H base station TS 38.104 [9]: Rx Transceiver Array Boundary connector. The reference point for T_{gNB-TX} may be as follows: - For type 1-C base station TS 38.104 [9]: Tx antenna connector, - For type 1-O or 2-O base station TS 38.104 [9]: Tx antenna, - For type 1-H base station TS 38.104 [9]: Tx Transceiver Array Boundary connector.

For example, the following may represent an example of a UL Angle of Arrival (AoA). For example, the following UL AoA may be applied for SL positioning.

UL Angle of Arrival (UL AoA)
- Definition: UL Angle of Arrival (AoA) may be defined as the estimated azimuth angle and vertical angle of a UE with respect to a reference direction, wherein the reference direction is defined as follows: - In the global coordinate system (GCS), wherein estimated azimuth angle may be measured relative to geographical North and positive in a counter-clockwise direction and estimated vertical angle may be measured relative to zenith and positive to horizontal direction. - In the local coordinate system (LCS), wherein estimated azimuth angle may be measured relative to x-axis of LCS and positive in a counter-clockwise direction and estimated vertical angle may be measured relative to z-axis of LCS and positive to x-y plane direction. The bearing, down-tilt and slant angles of LCS may be defined according to TS 38.901 [14]. The UL AoA may be determined at the gNB antenna for an UL channel corresponding to this UE.

For example, the following may represent an example of a UL SRS reference signal received power (RSRP). For example, the following UL SRS RSRP may be applied for SL positioning.

### UL SRS reference signal received power (RSRP)

Definition: UL SRS reference signal received power (RSRP) may be defined as linear average of the power contributions (in [W]) of the resource elements carrying sounding reference signals (SRS). UL SRS-RSRP may be measured over the configured resource elements within the considered measurement frequency bandwidth in the configured measurement time occasions. For frequency range 1, the reference point for the UL SRS-RSRP may be the antenna connector of the gNB. For frequency range 2, UL SRS-RSRP may be measured based on the combined signal from antenna elements corresponding to a given receiver branch. For frequency range 1 and 2, if receiver diversity is in use by the gNB, the reported UL SRS-RSRP value may not be lower than the corresponding UL SRS-RSRP of any of the individual receiver branches.

For example, the following represents an example of a line-of-sight propagation path from a source to a receiver. For example, the following line-of-sight propagation path may be a line-of-sight regarding location-related measurement (value) (e.g., TOA, RSRP(P), the above-mentioned measurement (value) (reference signal time difference (RSTD), DL PRS reference signal received power (DL PRS RSRP), DL relative signal time difference (DL RSTD), UE Rx-Tx time difference, UL Relative Time of Arrival (UL RTOA), gNB Rx-Tx time difference, UL Angle of Arrival (UL AoA), UL SRS reference signal received power (UL SRS RSRP))). For example, the following line-of-sight may be applied for SL positioning and/or wireless sensing (and/or communication integrated with wireless sensing).

### Line-of-sight

Definition: It may be defined as a likelihood of a line-of-sight propagation path from a source to a receiver. For example, that there is no line-of-sight propagation path from a source to a receiver (likelihood 0, FALSE), or there is a line-of-sight propagation path (likelihood 1, TRUE) may be defined in a hard way (e.g., Boolean). For example, that there is a certain degree of likelihood that there is a line-of-sight propagation path from a source to a receiver (e.g., a probability within a range from 0 to 1, for example, 10%, 20%, 30%, 40%, 50%, 60%, 70%, 80%, 90%, 100%) may be defined in a soft way (e.g., scale). A likelihood of a line-of-sight propagation path from a source to a receiver may be defined in the hard way and the soft way. For example, a granularity of a line-of-sight propagation path from a source to a receiver may be TRP-specific. For example, a granularity of a line-of-sight propagation path from a source to a receiver may be resource-specific. For example, a granularity of a line-of-sight propagation path from a source to a receiver may be signal-specific.

In the present disclosure, the following terms may be used.
- LMF: location management function
- UE-triggered SL positioning: sidelink (SL) positioning where the procedure is triggered by the UE.
- Base station/LMF-triggered SL positioning: SL positioning where the procedure is triggered by the base station/LMF
- UE-controlled SL positioning: SL positioning where the SL positioning group is created by the UE
- Base station-controlled SL positioning: SL positioning where the SL positioning group is created by the base station
- UE-based SL positioning: SL positioning where the UE position is calculated by the UE
- UE-assisted SL positioning: SL positioning where the UE position is calculated by the base station/LMF
- SL positioning group: UEs that participate in SL positioning
- Target UE (T-UE): UE whose position is calculated
- Server UE (S-UE): UE that assists T-UE's positioning
- Anchor UE: UE that assists T-UE's positioning
- MG: measurement gap where only SL PRS transmission is allowed
- MW: measurement window where both SL data and SL PRS can be transmitted in a multiplexed way
- SL PRS: sidelink positioning reference signal
- CCH: control channel
- Inter-UE coordination (IUC) message: a message that a TX UE receives from other UEs, including an RX UE, that includes information regarding a set of resources (preferred resources) suitable for transmission and/or information regarding a set of resources (non-preferred resources) not suitable for transmission by the TX UE to the RX UE
- Sensing RS: a reference signal used for a sensing purpose (e.g., a reference signal, a radar, a LiDAR, a Wi-Fi signal, an ultrasonic signal, etc.)
- BS-BS sensing: BS-BS sensing may refer to sensing where BS#1 transmits a sensing RS and BS#2 receives the sensing RS. A case where BS#1 and BS#2 are distinct BSs from each other may refer to a BS-BS bi-static sensing operation, and a case where BS#1 and BS#2 are the same BS may refer to a BS-BS mono-static sensing operation. The BS may be a base station or a transmission and reception point (TRP). A case where BS#1 and/or BS#2 are one or more BSs may refer to a BS-BS multi-static sensing operation.
- BS-UE sensing: BS-UE sensing may refer to sensing where a BS transmits a sensing RS and a UE receives the sensing RS. The BS may be a base station or a transmission and reception point (TRP). A case where the BS and/or the UE are one or more BSs and/or one or more UEs may refer to a BS-UE multi-static sensing operation.
- UE-BS sensing: UE-BS sensing may refer to sensing where a UE transmits a sensing RS and a BS receives the sensing RS. The BS may be a base station or a transmission and reception point (TRP). A case where the BS and/or the UE are one or more BSs and/or one or more UEs may refer to a UE-BS multi-static sensing operation.
- UE-UE sensing: UE-UE sensing may refer to sensing where UE#1 transmits a sensing RS and UE#2 receives the sensing RS. A case where UE#1 and UE#2 are distinct UEs from each other may refer to a UE-UE bi-static sensing operation, and a case where UE#1 and UE#2 are the same UE may refer to a UE-UE mono-static sensing operation. The BS may be a base station or a transmission and reception point (TRP). A case where UE#1 and/or UE#2 are one or more UEs may refer to a UE-UE multi-static sensing operation.
- SMF: sensing management function
- TSA: target sensing area (a location area requiring sensing (deriving a characteristic of an object and/or an environment from an impacted (e.g., reflected, refracted, diffracted) sensing signal) having a certain quality of a sensing service)

For example, the SL PRS resource set may include SL PRS resource(s) comprising the following information.
- SL PRS resource ID
- SL PRS comb size: an interval between REs for SL PRS transmission within a symbol
- SL PRS comb offset: an RE index in which the SL PRS is first transmitted within the first SL PRS symbol
- SL PRS comb cyclic shift: a cyclic shift used to generate a sequence that makes up the SL PRS
- SL PRS start position: an index of the first symbol in which the SL PRS is transmitted within one slot
- Number of SL PRS symbols: the number of symbols configured for the SL PRS within one slot
- Frequency domain shift: the lowest frequency position (index) in the frequency domain in which the SL PRS is transmitted
- SL PRS BW: frequency bandwidth used for SL PRS transmission
- SL PRS resource type: which can be set to periodic, aperiodic, semi-persistent or on-demand
- SL PRS periodicity: periodicity in the time domain between SL PRS resources, in a unit of physical slot or a unit of logical slot in a resource pool in which the SL PRS is transmitted
- SL PRS offset: an offset in the time domain to the start of the first SL PRS resource relative to reference timing, in a unit of physical slot or a unit of logical slot in a resource pool in which the SL PRS is transmitted. The reference timing may be SFN=0 or DFN=0 or the time of successful reception or decoding of RRC / MAC-CE / DCI / SCI associated with the SL PRS resource.
- SL PRS sequence ID
- SL PRS spatial relation: which may be set to SL SSB or DL PRS or UL SRS or UL SRS for positioning or PSCCH DMRS or PSSCH DMRS or PSFCH or SL CSI RS, etc.
- SL PRS CCH: SL PRS control channel. It may signal SL PRS resource configuration information, resource location, etc.

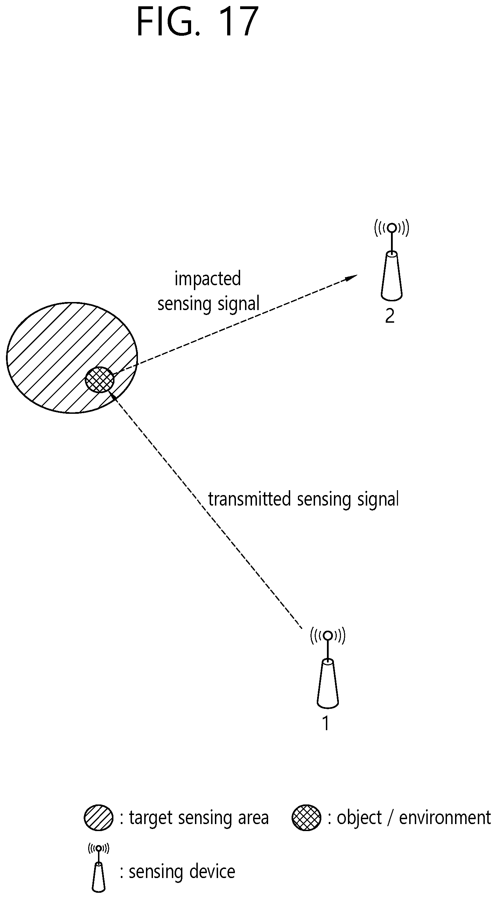

FIG. 17 is a diagram for explaining a method related to wireless sensing, based on an embodiment of the present disclosure. The embodiment of FIG. 17 may be combined with various embodiments of the present disclosure.

Referring to FIG. 17, for example, in order to implement a bistatic sensing function based on an integrated sensing and communication (ISAC) system, a first device (within a sensing group) may transmit a sensing signal. For example, the first device may transmit a sensing signal for a target sensing area (an object therein and/or an indoor/outdoor environment surrounding the object (e.g., other objects around a location of the object (e.g., clutter), other obstacles between the object and other objects (e.g., line-of-sight, non-line-of-sight, etc.))). For example, a second device (within the sensing group) may receive a sensing signal impacted (e.g., reflected, refracted, diffracted) by an object/an indoor/outdoor environment surrounding the object with respect to the transmitted sensing signal. Through this, it may be operated to sense the object and/or the environment. For example, by receiving/processing the impacted sensing signal, information on the object or the like (e.g., horizontal/vertical object detection, a location of the object, and/or a distance (range) to the object, and/or a direction (angle) to the object, and/or a velocity of the object, and/or geometric information of the object, and/or object recognition (e.g., a vehicle, a human, an animal, a UAV, etc.), etc.) may be obtained.

For example, the sensing signal may be a dedicated signal for a purpose of sensing, and/or may be a positioning reference signal that can perform positioning, and/or may be a reference signal that can be used for communication such as a demodulation-reference signal (DM-RS), a channel state information-reference signal (CSI-RS), a sounding reference signal (SRS), and/or may be a fused signal for purposes of both sensing and communication. For example, the sensing signal may be at least one of a radar, a LiDAR, a Wi-Fi signal, a camera (image), or an ultrasonic signal.

For example, the second device receiving the impacted sensing signal may be within the same entity as the first device transmitting the sensing signal. For example, the second device receiving the impacted sensing signal may be separate from the first device transmitting the sensing signal. For example, information related to a location of the first device and/or a location of the second device may be known. For example, information related to a time of the first device (e.g., a time when the sensing signal is transmitted) and/or a time of the second device (e.g., a time when the impacted sensing signal is received) may be known. For example, at least one first device transmitting the sensing signal and/or at least one second device receiving the impacted sensing signal may be within the sensing group.

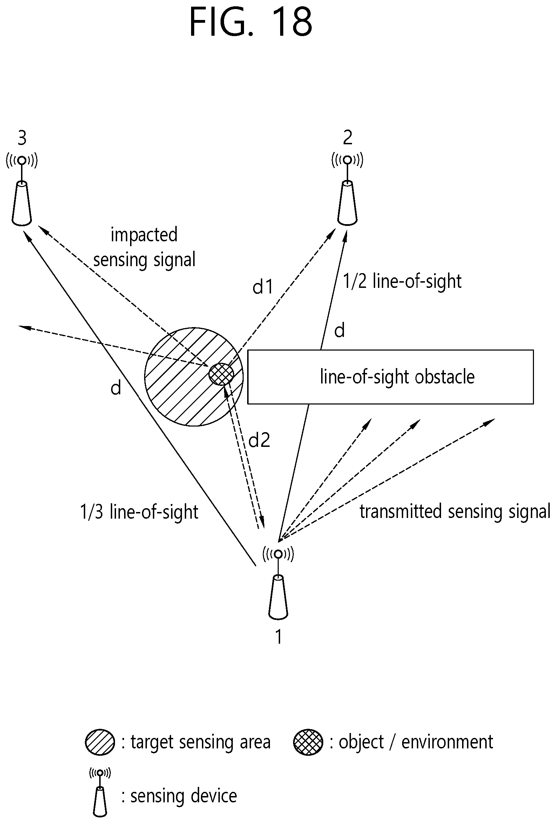

FIG. 18 is a diagram for explaining a method related to wireless sensing, based on an embodiment of the present disclosure. The embodiment of FIG. 18 may be combined with various embodiments of the present disclosure.

Referring to FIG. 18, for example, in order to implement a bistatic sensing function, a first device (within a sensing group) may transmit a sensing signal. For example, the first device may transmit a first sensing signal for a target sensing area (an object therein and/or an indoor/outdoor environment surrounding the object (e.g., other objects around a location of the object (e.g., clutter), other obstacles between the object and other objects (e.g., line-of-sight, non-line-of-sight, etc.))). For example, a second device (within the sensing group) may receive a second sensing signal impacted (e.g., reflected, refracted, diffracted) by an object/an indoor/outdoor environment surrounding the object with respect to the transmitted first sensing signal.

For example, the target sensing area may be determined by the first device, and/or the second device, and/or a third device (e.g., SMF, etc.) different from the first device and the second device. For example, the target sensing area may be defined as a circle/sphere based on a center point of the area (at a certain height (range)) and/or a radius of the area. For example, the target sensing area may be defined as a regular N-gon based on a center point of the area (at a certain height (range)) and/or a length of the area. For example, the target sensing area may be defined based on a zone ID and/or a zone length (at a certain height (range)). For example, the target sensing area may be defined based on a position (range) measured/predicted by positioning (at a certain height (range)) and/or a threshold value (e.g., position error). For example, the target sensing area may be defined based on a unit length of the area, and/or a center point of the area, and/or an angle (e.g., azimuth angle) (range) with respect to a first reference line passing through the center point, and/or an angle (e.g., zenith angle) (range) with respect to a second reference line passing through the center point, or an elevation angle (range) based on a first reference line passing through the center point. For example, the target sensing area may be defined as latitude (range) and/or longitude (range) and/or height (range).

For example, for the first device and the second device, a line-of-sight may not be secured (e.g., due to an obstacle between the first device and the second device blocking the line-of-sight). For example, for the first device and the third device, a line-of-sight may be secured. For example, a distance (d) between the first device and the second device may be shorter by a threshold value or more than a sum of a distance (d2) between the first device and the target sensing area (e.g., a distance determined through RTT positioning) and a distance (d1) between the target sensing area and the second device, and based on this (e.g., based on a difference in received intensity predicted through distance), it may be determined that the line-of-sight is not secured. For example, a distance (d') between the first device and the third device may be shorter within a threshold value than a sum of a distance (d2') between the first device and the target sensing area (e.g., a distance determined through RTT positioning) and a distance (d1') between the target sensing area and the second device, and based on this (e.g., based on a difference in received intensity predicted through distance), it may be determined that the line-of-sight is secured.

For example, if a sensing signal is transmitted for the target sensing area in a state where a line-of-sight is not secured between a transmitting device and a receiving device within the sensing group, the receiving device cannot properly receive the impacted sensing signal. For example, if the transmitting device and/or the receiving device perform beamforming, the transmitting device knowing the location of the receiving device may concentrate transmission on a direction and an antenna area in which a received intensity of the receiving device is expected to be (most) strong, considering the location of the receiving device and an expected (reflection/diffraction/refraction) angle of an impacted sensing signal with respect to the target sensing area. Similarly, for example, if the transmitting device and/or the receiving device perform beamforming, the receiving device knowing the location of the transmitting device may concentrate reception on a direction and an antenna area in which a received intensity of the receiving device is expected to be (most) strong, considering the location of the transmitting device and an expected (reflection/diffraction/refraction) angle of an impacted sensing signal with respect to the target sensing area. However, if a line-of-sight is not secured between the transmitting device and the receiving device, even if transmission or reception is concentrated toward a place where the received intensity is (most) strong, a substantial received intensity is greatly reduced, so that the quality of the sensing service can be significantly reduced. In addition, if a line-of-sight is not secured between the transmitting device and the receiving device, if a mechanism or a positive/negative feedback for concentrating transmission or reception toward a place where the received intensity is (most) strong is performed, transmission or reception will be concentrated toward a place where the received intensity is (most) strong in an environment where the received intensity is overall low, so an incentive capable of changing a corresponding transmission/reception direction or the like may be insufficient. Therefore, for example, as long as an environment in which a line-of-sight is not secured continues, the quality of the sensing service can be continuously significantly reduced.

Based on an embodiment of the present disclosure, for example, among at least one device(s) of at least one transmitting device within the sensing group and at least one receiving device within the sensing group, a transmitting device and/or a receiving device for which a line-of-sight is secured may be determined to transmit a sensing signal and/or receive an impacted sensing signal. For example, a fourth device may transmit information requesting (instructing) a transmitting device and/or a receiving device for which a line-of-sight is secured (within the sensing group) to transmit a sensing signal and/or to receive an impacted sensing signal, to the transmitting device and/or the receiving device for which the line-of-sight is secured. For example, the first device and/or the second device/the third device may transmit information requesting (instructing) a transmitting device and/or a receiving device for which a line-of-sight is secured (within the sensing group) to transmit a sensing signal and/or to receive an impacted sensing signal, to the transmitting device and/or the receiving device for which the line-of-sight is secured. Therefore, a problem of reduced quality of the sensing service performed between the transmitting device and the receiving device for which the line-of-sight is not secured and the object/environment within the target sensing area can be solved. For example, since beamforming in which the transmitting device and/or the receiving device for which the line-of-sight is secured concentrate transmission or reception toward a place where the received intensity is (most) strong is smoothly performed, the substantial received intensity is greatly increased, so that the quality of the sensing service can be significantly improved.

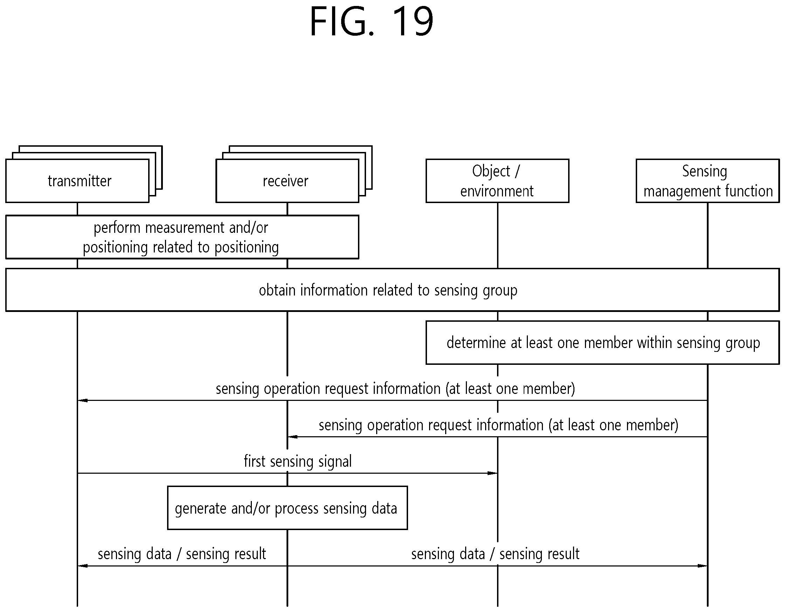

FIG. 19 is a diagram for explaining a procedure of a method related to wireless sensing, based on an embodiment of the present disclosure. The embodiment of FIG. 19 may be combined with various embodiments of the present disclosure.

Referring to FIG. 19, for example, at least one first device (transmitting device) and/or at least one second device (receiving device) may perform a measurement and/or positioning related to positioning. For example, the measurement and/or the positioning related to the positioning may include a measurement related to a line-of-sight and/or positioning related to a line-of-sight.

For example, at least one first device, at least one second device, and/or at least one third device (e.g., SMF) may obtain (e.g., may be configured with, may generate, etc.) information related to a sensing group. For example, information related to the sensing group may include information for determining at least one of a transmitting device member and/or a receiving device member within the sensing group. For example, information related to the sensing group may include information related to the target sensing area. For example, information related to the sensing group may include information related to a line-of-sight between members within the sensing group (related to positioning or measurement).

For example, the third device may transmit sensing operation request (instruction) information for requesting (instructing) at least one first member and/or at least one second member for which a line-of-sight is secured to perform a sensing operation (e.g., through a control channel, through a MAC CE, etc.).

For example, at least one first member for which a line-of-sight is secured may transmit a first sensing signal to an object within the target sensing area and/or an environment surrounding the object.

For example, at least one second member for which a line-of-sight is secured may receive an impacted (e.g., reflected, refracted, diffracted) second sensing signal.

For example, at least one second member for which a line-of-sight is secured may generate and/or process sensing data based on the second sensing signal.

For example, at least one second member for which a line-of-sight is secured may transmit the generated sensing data and/or the processed sensing result to at least one first member for which a line-of-sight is secured and/or at least one third device (e.g., SMF).

Based on an embodiment(s) of the present disclosure, for example, by determining a sensing group (member) among devices having a high likelihood of a line-of-sight propagation path from a source (transmitter) to a receiver or for which a line-of-sight propagation path is secured, sensing result information based on a sensing signal can be reliably secured. Based on an embodiment(s) of the present disclosure, for example, by determining a sensing group (member) among devices having a high likelihood of a line-of-sight propagation path from a source (transmitter) to a receiver or for which a line-of-sight propagation path is secured, multi-static/bistatic sensing based on a sensing signal can be efficiently performed.

Based on an embodiment of the present disclosure, in case of a UE-BS sensing operation, there may be a need to define an entity determining a target sensing area and an operation of the entity.

In the present disclosure, in case of a UE-BS sensing operation, a method for performing the UE-BS sensing based on an entity determining a target sensing area may be proposed.

Based on an embodiment of the present disclosure, for example, in case of UE-BS bi-static sensing where a transmitting device (e.g., TX UE) transmits a sensing RS, and a receiving device (e.g., RX BS) performs a sensing operation by receiving a signal in which the sensing RS is reflected by an object and by performing a measurement for the received sensing RS, the transmitting device (e.g., TX UE) and/or the receiving device (e.g., RX BS) may perform UE-BS bi-static sensing through operation(s) such as at least one of the following.
- For example, a Sensing Management Function (SMF) may determine a target sensing area.
   -- For example, a receiving device (e.g., RX BS) may perform operation(s) of the SMF, and/or
   -- For example, the SMF may determine a receiving device (e.g., RX BS) and/or a transmitting device (e.g., TX UE) to participate in sensing, and/or may request (instruct) the receiving device (e.g., RX BS) and the transmitting device (e.g., TX UE) to perform the sensing operation.
   --- For example, the SMF may determine a transmitting device (e.g., TX UE) and/or a receiving device (e.g., RX BS) to participate in the UE-BS bi-static sensing, among UEs and/or BSs within a threshold distance from the target sensing area.
   --- For example, the SMF may determine a UE and/or a BS for which a line-of-sight between a transmitting device (e.g., TX UE) and a receiving device (e.g., RX BS) is secured (e.g., a line-of-sight (likelihood) is 1, a line-of-sight (likelihood) is greater than or equal to a threshold value) among UEs and/or BSs, as a transmitting device (e.g., TX UE) and/or a receiving device (e.g., RX BS).
- For example, a receiving device (e.g., RX BS) may determine a target sensing area.
   -- For example, it may be limited to a case where the receiving device (e.g., RX BS) performs an operation of the SMF.
   -- For example, the receiving device (e.g., RX BS) determining the target sensing area may transmit the target sensing area information to a transmitting device (e.g., TX UE).
   --- For example, the receiving device (e.g., RX BS) may transmit the target sensing area information through a dedicated protocol used for a sensing operation or a physical downlink control channel/physical downlink shared channel.
   --- For example, in case of UE-BS multi-static sensing, the receiving device (e.g., RX BS) may transmit the target sensing area information to another receiving device (e.g., RX BS) and/or another transmitting device (e.g., TX UE) participating in sensing.
   --- For example, in case of UE-BS multi-static sensing, the transmitting device (e.g., TX UE) may transmit the target sensing area information received from the receiving device (e.g., RX BS) to another transmitting device (e.g., TX UE) participating in sensing.
   -- For example, the receiving device (e.g., RX BS) may report a sensing result to the SMF.
   --- For example, the receiving device (e.g., RX BS) may transmit the report through a dedicated protocol used for a sensing operation or a physical uplink control channel/physical uplink shared channel.
   -- For example, the receiving device (e.g., RX BS) determining the target sensing area may determine the transmitting device (e.g., TX UE) based on the target sensing area, and/or may instruct the transmitting device (e.g., TX UE) to perform the sensing operation.
   --- For example, the receiving device (e.g., RX BS) may determine the transmitting device (e.g., TX UE) to participate in the UE-BS bi-static sensing, among UEs within a threshold distance from the target sensing area.
   --- For example, among UEs, a UE for which a line-of-sight between a receiving device (e.g., RX BS) and a transmitting device (e.g., TX UE) is secured may be determined as a transmitting device (e.g., TX UE).
   --- For example, the transmitting device (e.g., TX UE) may be limited to a UE in an RRC connected state (RRC_CONNECTED_MODE state) (with the receiving device (e.g., RX BS)).
   --- For example, the receiving device (e.g., RX BS) may determine the target sensing area only within its own (partial) coverage area.
- For example, a transmitting device (e.g., TX UE) may determine a target sensing area.
   -- For example, the transmitting device (e.g., TX UE) may determine the target sensing area and transmit the target sensing area information to a receiving device (e.g., RX BS).
   --- For example, the transmitting device (e.g., TX UE) may select a receiving device (e.g., RX BS) to which to transmit a sensing RS, based on the target sensing area information.
   ---- For example, a BS closest to the target sensing area may be selected.
   ---- For example, a BS within a threshold distance from the target sensing area may be selected.
   ---- For example, a BS closest to a location of the transmitting device (e.g., TX UE) itself may be selected.
   ---- For example, a BS within a threshold distance from a location of the transmitting device (e.g., TX UE) itself may be selected.
   ---- For example, a BS establishing an RRC connected state (RRC_CONNECTED_MODE) (with the transmitting device (e.g., TX UE)) may be selected.
   ----- If a BS of a neighbor cell that is not a serving cell of the transmitting device (e.g., TX UE) is selected as a receiving device (e.g., RX BS), BS information (e.g., cell ID) of the selected neighbor cell may be reported to a BS of the serving cell.
   --- For example, in case of UE-BS multi-static sensing, the transmitting device (e.g., TX UE) may transmit the target sensing area information to another transmitting device (e.g., TX UE) participating in sensing.
   --- For example, in case of UE-BS multi-static sensing, the receiving device (e.g., RX BS) may transmit the target sensing area information received from the transmitting device (e.g., TX UE) to another receiving device (e.g., RX BS) participating in sensing.
   -- For example, the receiving device (e.g., RX BS) may report a sensing result for the sensing RS to the transmitting device (e.g., TX UE) or the SMF.
   --- For example, the report may include an ID associated with the receiving device (e.g., RX BS).
   --- For example, the report may include an ID associated with the transmitting device (e.g., TX UE).
   --- For example, the associated ID may be an ID of the transmitting device (e.g., TX UE) (e.g., source ID, destination ID).
   --- For example, the report may include an ID (e.g., sequence ID) associated with the sensing RS.
   --- For example, the report may include identification (ID) information (e.g., resource ID, resource set ID) associated with a resource in which the sensing RS is transmitted and/or a location of the resource.

Based on various embodiment(s) of the present disclosure, for a case of a UE-BS sensing operation, a method for efficiently performing UE-BS sensing based on an entity determining a target sensing area may be proposed.

For example, whether the rule is applied and/or the proposed method/rule related parameter value of the present disclosure may be configured/allowed specifically (or differently or independently) for a service type. For example, whether the rule is applied and/or the proposed method/rule related parameter value of the present disclosure may be configured/allowed specifically (or differently or independently) for a (LCH or service) priority. For example, whether the rule is applied and/or the proposed method/rule related parameter value of the present disclosure may be configured/allowed specifically (or differently or independently) for a QoS requirement (e.g., latency, reliability, minimum communication range). For example, whether the rule is applied and/or the proposed method/rule related parameter value of the present disclosure may be configured/allowed specifically (or differently or independently) for a PQI parameter. For example, whether the rule is applied and/or the proposed method/rule related parameter value of the present disclosure may be configured/allowed specifically (or differently or independently) for a SL HARQ feedback ENABLED LCH/MAC PDU (transmission). For example, whether the rule is applied and/or the proposed method/rule related parameter value of the present disclosure may be configured/allowed specifically (or differently or independently) for a SL HARQ feedback DISABLED LCH/MAC PDU (transmission). For example, whether the rule is applied and/or the proposed method/rule related parameter value of the present disclosure may be configured/allowed specifically (or differently or independently) for a CBR measurement value of a resource pool. For example, whether the rule is applied and/or the proposed method/rule related parameter value of the present disclosure may be configured/allowed specifically (or differently or independently) for a SL cast type (e.g., unicast, groupcast, broadcast). For example, whether the rule is applied and/or the proposed method/rule related parameter value of the present disclosure may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the proposed method/rule related parameter value of the present disclosure may be configured/allowed specifically (or differently or independently) for a SL mode 1 CG type (e.g., SL CG type 1 or SL CG type 2). For example, whether the rule is applied and/or the proposed method/rule related parameter value of the present disclosure may be configured/allowed specifically (or differently or independently) for a SL mode type (e.g., mode 1 or mode 2). For example, whether the rule is applied and/or the proposed method/rule related parameter value of the present disclosure may be configured/allowed specifically (or differently or independently) for a resource pool. For example, whether the rule is applied and/or the proposed method/rule related parameter value of the present disclosure may be configured/allowed specifically (or differently or independently) for whether a PSFCH resource is configured in a resource pool. For example, whether the rule is applied and/or the proposed method/rule related parameter value of the present disclosure may be configured/allowed specifically (or differently or independently) for a source (L2) ID. For example, whether the rule is applied and/or the proposed method/rule related parameter value of the present disclosure may be configured/allowed specifically (or differently or independently) for a destination (L2) ID. For example, whether the rule is applied and/or the proposed method/rule related parameter value of the present disclosure may be configured/allowed specifically (or differently or independently) for a PC5 RRC connection link. For example, whether the rule is applied and/or the proposed method/rule related parameter value of the present disclosure may be configured/allowed specifically (or differently or independently) for a SL link. For example, whether the rule is applied and/or the proposed method/rule related parameter value of the present disclosure may be configured/allowed specifically (or differently or independently) for a connection state (e.g., RRC CONNECTED state, IDLE state, INACTIVE state) (with a base station). For example, whether the rule is applied and/or the proposed method/rule related parameter value of the present disclosure may be configured/allowed specifically (or differently or independently) for a SL HARQ process (ID). For example, whether the rule is applied and/or the proposed method/rule related parameter value of the present disclosure may be configured/allowed specifically (or differently or independently) for whether to perform SL DRX operation (of TX UE or RX UE). For example, whether the rule is applied and/or the proposed method/rule related parameter value of the present disclosure may be configured/allowed specifically (or differently or independently) for whether a UE is a power saving (TX or RX) UE. For example, whether the rule is applied and/or the proposed method/rule related parameter value of the present disclosure may be configured/allowed specifically (or differently or independently) for a case where (from a specific UE perspective) PSFCH TX and PSFCH RX (and/or a plurality of PSFCH TX (exceeding UE capabilities)) overlap (and/or PSFCH TX (and/or PSFCH RX) is omitted). For example, whether the rule is applied and/or the proposed method/rule related parameter value of the present disclosure may be configured/allowed specifically (or differently or independently) for a case where the RX UE actually (successfully) receives PSCCH (and/or PSSCH) (re)transmission from the TX UE.

For example, in the present disclosure, the term "configure/configured (or designate/designated)" may be extended and interpreted in the form of the base station informing the UE through a pre-defined (physical layer or higher layer) channel/signal (e.g., SIB, RRC, MAC CE) (and/or in the form of being provided through pre-configuration and/or in the form of the UE informing other UEs through a pre-defined (physical layer or higher layer) channel/signal (e.g., SL MAC CE, PC5 RRC)).

For example, in the present disclosure, the term "PSFCH" may be extended and interpreted as (NR or LTE) PSSCH (and/or (NR or LTE) PSCCH) (and/or (NR or LTE) SL SSB (and/or UL channel/signal)). In addition, the proposed methods of the present disclosure may be used in combination with each other (in the form of a new type/method).

For example, in the present disclosure, a specific threshold may refer to a threshold pre-defined or (pre-)configured by the network or the base station or the upper layer (including the application layer) of the UE. For example, in the present disclosure, a specific configured value may refer to a value pre-defined or (pre-)configured by the network or the base station or the upper layer (including the application layer) of the UE. For example, the operation configured by the network/base station may refer to the operation in which the base station (pre-)configures to the UE through higher layer RRC signaling, configures/signals to the UE through MAC CE, or signals to the UE through DCI.

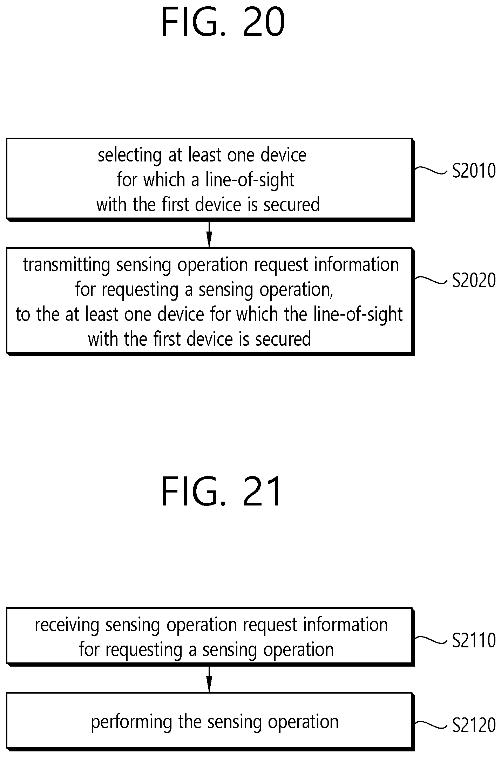

FIG. 20 is a diagram for explaining a method performed by a first device, based on an embodiment of the present disclosure. The embodiment of FIG. 20 may be combined with various embodiments of the present disclosure.

Referring to FIG. 20, in step S2010, for example, the first device may select at least one device for which a line-of-sight with the first device is secured. In step S2020, for example, the first device may transmit sensing operation request information for requesting a sensing operation, to the at least one device for which the line-of-sight with the first device is secured.

Additionally, or alternatively, the sensing operation may include at least one operation of transmission of a first sensing signal, or reception of a second sensing signal impacted by an object or an environment surrounding the object.

Additionally, or alternatively, the first device may be located within an entity different from the at least one device.

Additionally, or alternatively, information related to a target sensing area for which sensing is required may be obtained.

Additionally, or alternatively, the line-of-sight may include a line-of-sight related to a propagation path between a transmitting device related to transmission of a first sensing signal and a receiving device related to reception of a second sensing signal impacted by an object or an environment surrounding the object.

Additionally, or alternatively, the at least one device may include at least one device (i) for which the line-of-sight with the first device is secured, or (ii) which is within a threshold distance from a target sensing area for which sensing is required.

Additionally, or alternatively, the at least one device may include at least one device (i) for which the line-of-sight with the first device is secured, or (ii) which is closest to a target sensing area for which sensing is required.

Additionally, or alternatively, the at least one device may include at least one device (i) for which the line-of-sight with the first device is secured, or (ii) for which a distance from the first device is less than or equal to a threshold value.

Additionally, or alternatively, the at least one device may include at least one device (i) for which the line-of-sight with the first device is secured, or (ii) for which a distance from the first device is closest.

Additionally, or alternatively, the at least one device may include at least one device (i) for which the line-of-sight with the first device is secured, or (ii) for which a radio resource control connection with the first device is established.

Additionally, or alternatively, information related to a result of the sensing operation, including information related to an ID regarding the at least one device, may be received.

Additionally, or alternatively, information related to a result of the sensing operation, including information related to a sequence ID regarding a sensing signal used for the sensing operation, may be received.

Additionally, or alternatively, information related to a result of the sensing operation, including information related to a sensing resource used for the sensing operation, may be received.

The proposed method may be applied to devices based on various embodiments of the present disclosure. First, the memory 104 of the first device 100 may store instructions that, based on being executed by the processor 102, cause the first device (e.g., the processor 102, the transceiver 106) to perform operations. For example, the operations may comprise at least one of: selecting at least one device for which a line-of-sight with the first device is secured; and/or transmitting sensing operation request information for requesting a sensing operation, to the at least one device for which the line-of-sight with the first device is secured.

In an embodiment, a method is provided that is performed by a first device. For example, the first device may select at least one device for which a line-of-sight with the first device is secured. For example, the first device may transmit sensing operation request information for requesting a sensing operation, to the at least one device for which the line-of-sight with the first device is secured.

In an embodiment, a first device is provided. The first device may comprise: at least one transceiver; at least one processor; and at least one memory connected to the at least one processor and storing instructions that, based on being executed by the at least one processor, cause the first device to perform operations. For example, the operations may comprise: transmitting sensing operation request information for requesting a sensing operation, to the at least one device for which the line-of-sight with the first device is secured.

In an embodiment, a processing device adapted to control a first device is provided. The processing device may comprise: at least one processor; and at least one memory connected to the at least one processor and storing instructions that, based on being executed by the at least one processor, cause the first device to perform operations. For example, the operations may comprise at least one of: selecting at least one device for which a line-of-sight with the first device is secured; and/or transmitting sensing operation request information for requesting a sensing operation, to the at least one device for which the line-of-sight with the first device is secured.

In an embodiment, a non-transitory computer-readable storage medium storing instructions is provided. The instructions, when executed by at least one processor, may cause a first device to perform operations. For example, the operations may comprise at least one of: selecting at least one device for which a line-of-sight with the first device is secured; and/or transmitting sensing operation request information for requesting a sensing operation, to the at least one device for which the line-of-sight with the first device is secured.

FIG. 21 is a diagram for explaining a method performed by a second device, based on an embodiment of the present disclosure. The embodiment of FIG. 21 may be combined with various embodiments of the present disclosure.

Referring to FIG. 21, in step S2110, for example, the second device may receive sensing operation request information for requesting a sensing operation. In step S2120, for example, the second device may perform the sensing operation. For example, the second device performing the sensing operation may be included in at least one device for which a line-of-sight is secured.

Additionally, or alternatively, the sensing operation may include at least one operation of transmission of a first sensing signal, or reception of a second sensing signal impacted by an object or an environment surrounding the object.

Additionally, or alternatively, the first device may be located within an entity different from the at least one device.

Additionally, or alternatively, information related to a target sensing area for which sensing is required may be obtained.

Additionally, or alternatively, the line-of-sight may include a line-of-sight related to a propagation path between a transmitting device related to transmission of a first sensing signal and a receiving device related to reception of a second sensing signal impacted by an object or an environment surrounding the object.

Additionally, or alternatively, the at least one device may include at least one device (i) for which the line-of-sight with the first device is secured, or (ii) which is within a threshold distance from a target sensing area for which sensing is required.

Additionally, or alternatively, the at least one device may include at least one device (i) for which the line-of-sight with the first device is secured, or (ii) which is closest to a target sensing area for which sensing is required.

Additionally, or alternatively, the at least one device may include at least one device (i) for which the line-of-sight with the first device is secured, or (ii) for which a distance from the first device is less than or equal to a threshold value.

Additionally, or alternatively, the at least one device may include at least one device (i) for which the line-of-sight with the first device is secured, or (ii) for which a distance from the first device is closest.

Additionally, or alternatively, the at least one device may include at least one device (i) for which the line-of-sight with the first device is secured, or (ii) for which a radio resource control connection with the first device is established.

Additionally, or alternatively, information related to a result of the sensing operation, including information related to an ID regarding the at least one device, may be received.

Additionally, or alternatively, information related to a result of the sensing operation, including information related to a sequence ID regarding a sensing signal used for the sensing operation, may be received.

Additionally, or alternatively, information related to a result of the sensing operation, including information related to a sensing resource used for the sensing operation, may be received.

The proposed method may be applied to devices based on various embodiments of the present disclosure. First, the memory 204 of the second device 200 may store instructions that, based on being executed by the processor 202, cause the second device (e.g., the processor 202, the transceiver 206) to perform operations. For example, the operations may comprise at least one of: receiving sensing operation request information for requesting a sensing operation; and/or performing the sensing operation, wherein the second device performing the sensing operation may be included in at least one device for which a line-of-sight is secured.

In an embodiment, a method is provided that is performed by a second device. For example, the second device may receive sensing operation request information for requesting a sensing operation. For example, the second device may perform the sensing operation. For example, the second device performing the sensing operation may be included in at least one device for which a line-of-sight is secured.

In an embodiment, a second device is provided. The second device may comprise: at least one transceiver; at least one processor; and at least one memory connected to the at least one processor and storing instructions that, based on being executed by the at least one processor, cause the second device to perform operations. For example, the operations may comprise at least one of: receiving sensing operation request information for requesting a sensing operation; and/or performing the sensing operation, wherein the second device performing the sensing operation may be included in at least one device for which a line-of-sight is secured.

In an embodiment, a processing device (apparatus) adapted to control a second device is provided. The processing device (apparatus) may comprise: at least one processor; and at least one memory connected to the at least one processor and storing instructions that, based on being executed by the at least one processor, cause the second device to perform operations. For example, the operations may comprise at least one of: receiving sensing operation request information for requesting a sensing operation; and/or performing the sensing operation, wherein the second device performing the sensing operation may be included in at least one device for which a line-of-sight is secured.

In an embodiment, a non-transitory computer-readable storage medium storing instructions is provided. The instructions, when executed by at least one processor, may cause a second device to perform operations. For example, the operations may comprise at least one of: receiving sensing operation request information for requesting a sensing operation; and/or performing the sensing operation, wherein the second device performing the sensing operation may be included in at least one device for which a line-of-sight is secured.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

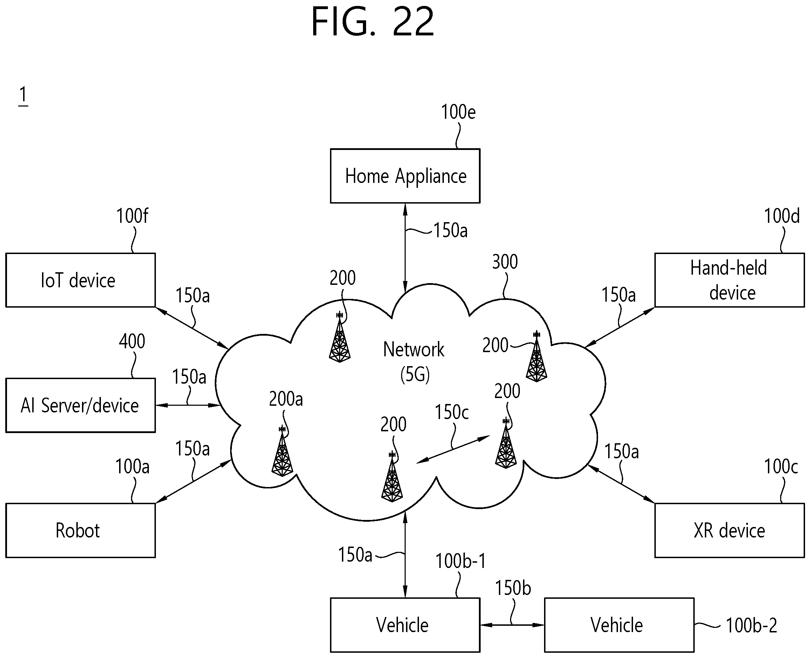

FIG. 22 shows a communication system 1, based on an embodiment of the present disclosure. The embodiment of FIG. 22 may be combined with various embodiments of the present disclosure.

Referring to FIG. 22, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

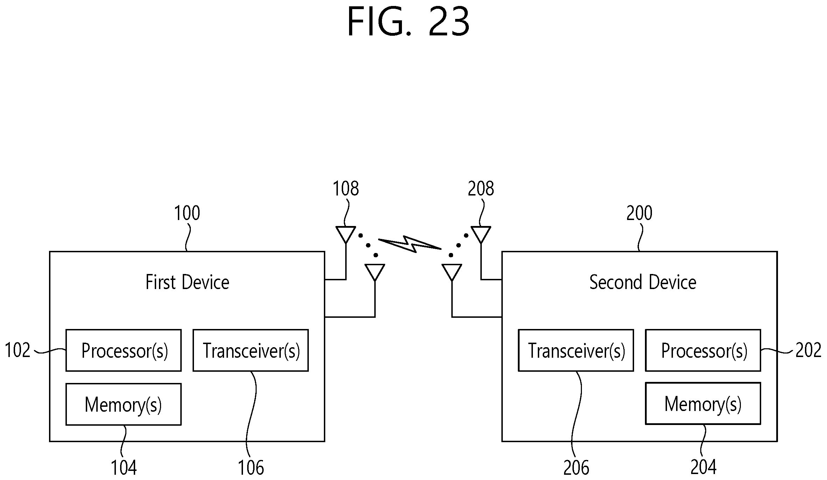

FIG. 23 shows wireless devices, based on an embodiment of the present disclosure. The embodiment of FIG. 23 may be combined with various embodiments of the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

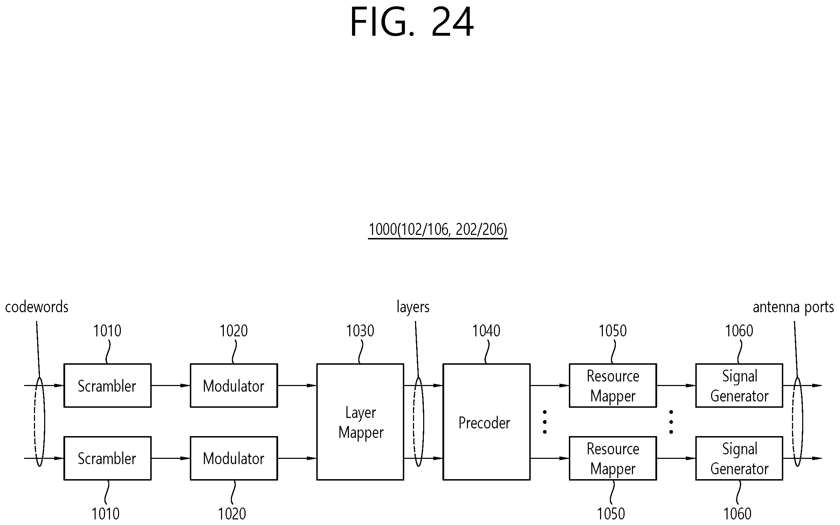

FIG. 24 shows a signal process circuit for a transmission signal, based on an embodiment of the present disclosure. The embodiment of FIG. 24 may be combined with various embodiments of the present disclosure.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 23. Hardware elements of FIG. 24 may be implemented by the processors 102 and 202 and/or the transceivers 106 and 206 of FIG. 23. For example, blocks 1010 to 1060 may be implemented by the processors 102 and 202 of FIG. 23. Alternatively, the blocks 1010 to 1050 may be implemented by the processors 102 and 202 of FIG. 23 and the block 1060 may be implemented by the transceivers 106 and 206 of FIG. 23.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 23) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

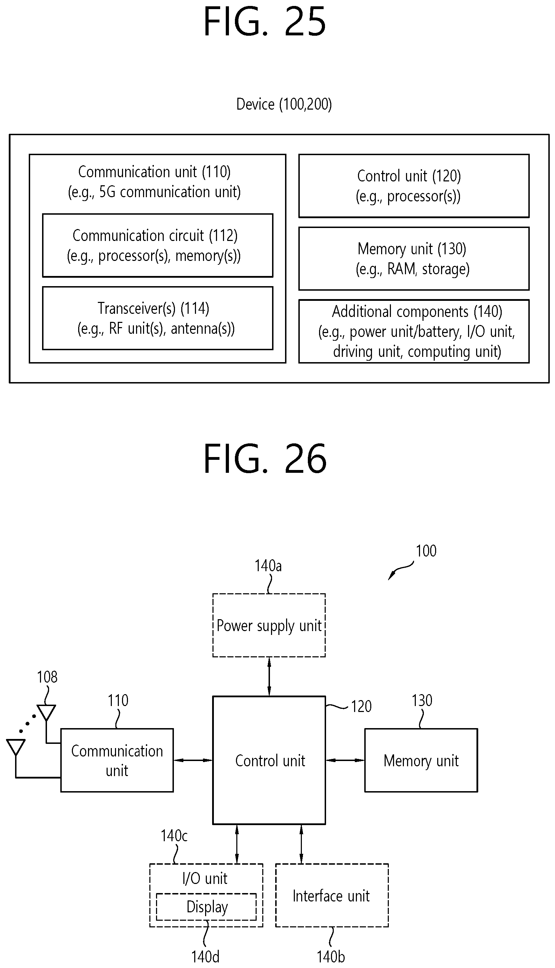

FIG. 25 shows another example of a wireless device, based on an embodiment of the present disclosure. The wireless device may be implemented in various forms according to a use-case/service (refer to FIG. 22). The embodiment of FIG. 25 may be combined with various embodiments of the present disclosure.

Referring to FIG. 25, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

FIG. 26 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 26 may be combined with various embodiments of the present disclosure.

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

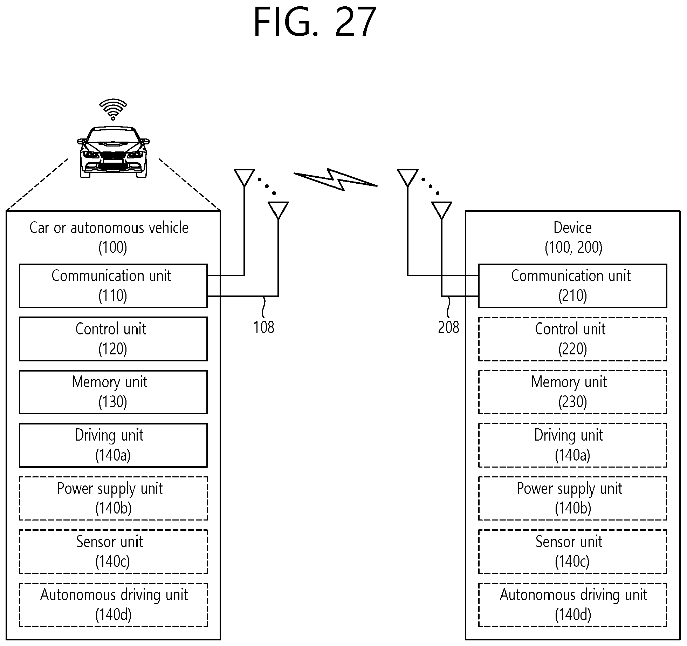

FIG. 27 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 27 may be combined with various embodiments of the present disclosure.

Referring to FIG. 27, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device, comprising:
selecting at least one device for which a line-of-sight with the first device is secured; and
transmitting sensing operation request information for requesting a sensing operation, to the at least one device for which the line-of-sight with the first device is secured.

2. The method of claim 1, wherein the sensing operation includes at least one operation of transmission of a first sensing signal, or reception of a second sensing signal impacted by an object or an environment surrounding the object.

3. The method of claim 1, wherein the first device is located within an entity different from the at least one device.

4. The method of claim 1, further comprising:
obtaining information related to a target sensing area for which sensing is required.

5. The method of claim 1, wherein the line-of-sight includes a line-of-sight related to a propagation path between a transmitting device related to transmission of a first sensing signal and a receiving device related to reception of a second sensing signal impacted by an object or an environment surrounding the object.

6. The method of claim 1, wherein the at least one device includes at least one device (i) for which the line-of-sight with the first device is secured, or (ii) which is within a threshold distance from a target sensing area for which sensing is required.

7. The method of claim 1, wherein the at least one device includes at least one device (i) for which the line-of-sight with the first device is secured, or (ii) which is closest to a target sensing area for which sensing is required.

8. The method of claim 1, wherein the at least one device includes at least one device (i) for which the line-of-sight with the first device is secured, or (ii) for which a distance from the first device is less than or equal to a threshold value.

9. The method of claim 1, wherein the at least one device includes at least one device (i) for which the line-of-sight with the first device is secured, or (ii) for which a distance from the first device is closest.

10. The method of claim 1, wherein the at least one device includes at least one device (i) for which the line-of-sight with the first device is secured, or (ii) for which a radio resource control connection with the first device is established.

11. The method of claim 1, further comprising:
receiving information related to a result of the sensing operation, including information related to an ID regarding the at least one device.

12. The method of claim 1, further comprising:
receiving information related to a result of the sensing operation, including information related to a sequence ID regarding a sensing signal used for the sensing operation.

13. The method of claim 1, further comprising:
receiving information related to a result of the sensing operation, including information related to a sensing resource used for the sensing operation.

14. A first device, comprising:
at least one transceiver;
at least one processor; and
at least one memory connected to the at least one processor and storing instructions that, based on being executed by the at least one processor, cause the first device to perform operations comprising:
selecting at least one device for which a line-of-sight with the first device is secured; and
transmitting sensing operation request information for requesting a sensing operation, to the at least one device for which the line-of-sight with the first device is secured.

15. A processing device adapted to control a first device, the processing device comprising:
at least one processor; and
at least one memory connected to the at least one processor and storing instructions that, based on being executed by the at least one processor, cause the first device to perform operations comprising:
selecting at least one device for which a line-of-sight with the first device is secured; and
transmitting sensing operation request information for requesting a sensing operation, to the at least one device for which the line-of-sight with the first device is secured.

16. A non-transitory computer-readable storage medium storing instructions that, when executed, cause a first device to perform operations comprising:
selecting at least one device for which a line-of-sight with the first device is secured; and
transmitting sensing operation request information for requesting a sensing operation, to the at least one device for which the line-of-sight with the first device is secured.

17. A method performed by a second device, comprising:
receiving sensing operation request information for requesting a sensing operation; and
performing the sensing operation,
wherein the second device performing the sensing operation is included in at least one device for which a line-of-sight is secured.

18. A second device, comprising:
at least one transceiver;
at least one processor; and
at least one memory connected to the at least one processor and storing instructions that, based on being executed by the at least one processor, cause the second device to perform operations comprising:
receiving sensing operation request information for requesting a sensing operation; and
performing the sensing operation,
wherein the second device performing the sensing operation is included in at least one device for which a line-of-sight is secured.

19. A processing device adapted to control a second device, the processing device comprising:
at least one processor; and
at least one memory connected to the at least one processor and storing instructions that, based on being executed by the at least one processor, cause the second device to perform operations comprising:
receiving sensing operation request information for requesting a sensing operation; and
performing the sensing operation,
wherein the second device performing the sensing operation is included in at least one device for which a line-of-sight is secured.

20. A non-transitory computer-readable storage medium storing instructions that, when executed, cause a second device to perform operations comprising:
receiving sensing operation request information for requesting a sensing operation; and
performing the sensing operation,
wherein the second device performing the sensing operation is included in at least one device for which a line-of-sight is secured.
